# EUROPEAN PATENT SPECIFICATION

(11) **EP 2 599 991 B1**
(45) Date of publication and mention of the grant of the patent: **19.06.2019**
(21) Application number: 12191226.5
(22) Date of filing: 05.11.2012
(51) Int. Cl.: F02P 3/02

(54) **Saddle riding type vehicle**
Sattelfahrzeug
Véhicule à selle

(30) Priority: 30.11.2011 JP 2011262749
(43) Date of publication of application: 05.06.2013
(73) Proprietor: Yamaha Hatsudoki Kabushiki Kaisha, Iwata-shi, Shizuoka 438-8501 (JP)
(72) Inventor: Suzuki, Hironari, Shizuoka, Shizuoka 438-8501 (JP); Kino, Yusuke, Shizuoka, Shizuoka 438-8501 (JP)
(74) Representative: Stöckeler, Ferdinand

(56) References cited:
- CN-A- 101 092 897
- JP-A- 2010 196 712
- JP-A- 2011 196 218
- US-A- 5 630 721

## Description

### BACKGROUND

### Technical Field

The present invention relates to a structure of an engine for a saddle riding type vehicle.

### Description of the Background Art

An example of a saddle riding type vehicle is a motorcycle. The motorcycle has an ignition plug and an ignition coil. The ignition plug is used to ignite an air-fuel mixture compressed in a combustion chamber and let the air-fuel mixture explode/combust. The ignition coil produces voltage to be discharged with the ignition plug. The ignition plug and ignition coil are connected by a plug cord. The ignition plug and the ignition coil are provided in the vicinity of a cylinder head as disclosed by Japanese Patent No. 4170515 (Patent Document 1) and JP-A 2009-191750 (Patent Document 2). JP 2011 196218 A discloses a saddle riding type vehicle, where the ignition plug and coil are attached to opposite cylinder head side surfaces, with the plug cord connecting them provided above the cylinder head.

### SUMMARY

In a motorcycle, for example an air cleaner is provided around a cylinder head. Therefore, the arrangement of an ignition plug and an ignition coil is restricted in some cases.

Sensors used to detect the state of the engine are provided around the cylinder head (such as an intake temperature sensor related to fuel injection). Here, high voltage current is passed through a plug cord used to connect the ignition plug and the ignition coil. In order to prevent noises to the sensor, care must be taken about how to arrange the plug cord.

It is an object of the present invention to provide a saddle riding type vehicle that allows an ignition plug, an ignition coil, and a plug cord to be arranged efficiently.

The saddle riding type vehicle according to the present invention includes an engine having a cylinder head, an ignition plug attached at a side surface of the cylinder head, an ignition coil attached to a side surface of the cylinder head that is opposite, in the width direction of the vehicle, to the side surface provided with the ignition plug, and a plug cord arranged to connect the ignition plug and the ignition coil and the plug cord is provided under the cylinder head.

The saddle riding type vehicle allows an ignition plug, an ignition coil, and a plug cord to be arranged efficiently.

### BRIEF DESCRIPTION OF THE DRAWINGS

Fig. 1 is a left side view of an overall structure of a motorcycle according to an embodiment of the present invention.
Fig. 2 is a left side view of a power unit provided in a motorcycle shown in Fig. 1.
Fig. 3 is a left side view of the engine in the power unit shown in Fig. 2.
Fig. 4 is a right side view of the engine in the power unit shown in Fig. 2.
Fig. 5 is a front view of the engine in the power unit shown in Fig. 2.
Fig. 6 is a bottom view of the engine provided in the power unit shown in Fig. 2.

### DESCRIPTION OF THE EMBODIMENTS

### Embodiments

Now, a saddle riding type vehicle according to an embodiment of the present invention will be described in conjunction with the accompanying drawings. The embodiment will be described by illustrating a scooter type motorcycle as an example of the saddle riding type vehicle. In the drawings, the same or corresponding portions are designated by the same reference characters and their description will not be repeated.

### Overall Structure

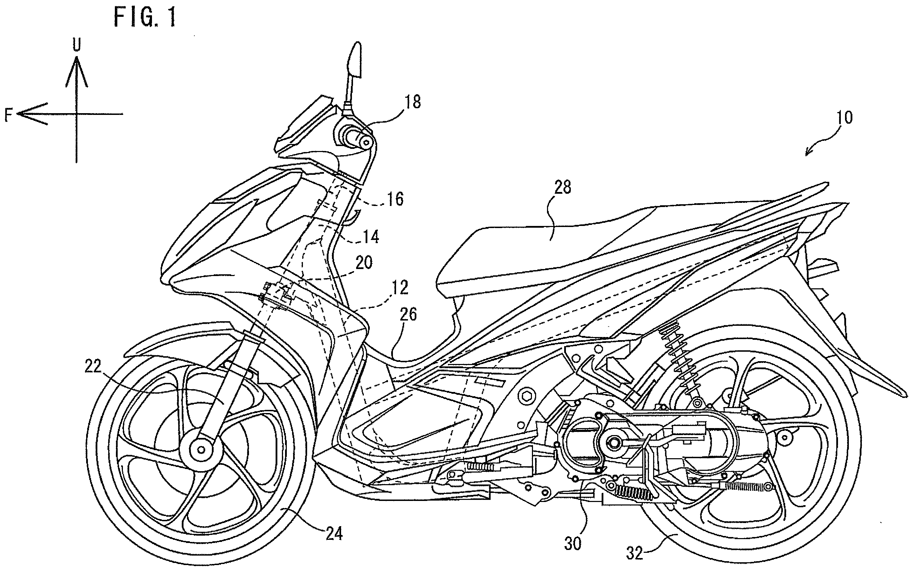

Fig. 1 is a left side view of a motorcycle 10 according to the embodiment of the invention. Note that in the following description, the front, rear, left, and right refer to these directions viewed from a rider seated on the seat 28 of the motorcycle 10. In Fig. 1, the arrow F designates the forward direction of the motorcycle 10 and the arrow U designates the upward direction of the motorcycle 10.

The motorcycle 10 includes a vehicle body frame 12. A head pipe 14 is provided at a front end of the vehicle body frame 12.

A steering shaft 16 is inserted in the head pipe 14 in a rotatable manner to the left and right. A handle 18 is attached at an upper end of the steering shaft 16. The steering shaft 16 is rotated by operating the handle 18.

A bracket 20 is attached at a lower end of the steering shaft 16. Upper end of a front fork 22 is attached to the bracket 20. The front fork 22 supports a front wheel 24 in a rotatable manner.

The vehicle body frame 12 is covered with a vehicle body cover 26. The vehicle body cover 26 is for example made of synthetic resin.

The seat 28 is provided above the vehicle body frame 12 on the rear side. There is a storage space under the seat 28. The storage space stores for example a helmet.

A power unit 30 is provided under the vehicle body frame 12 on the rear side. The vehicle body frame 12 supports the power unit 30 swingably in the vertical direction.

A rear wheel 32 is attached in a rotatable manner at a rear end of the power unit 30. As the motive power of the power unit 30 is transmitted to the rear wheel 32, the rear wheel 32 rotates.

### Power Unit

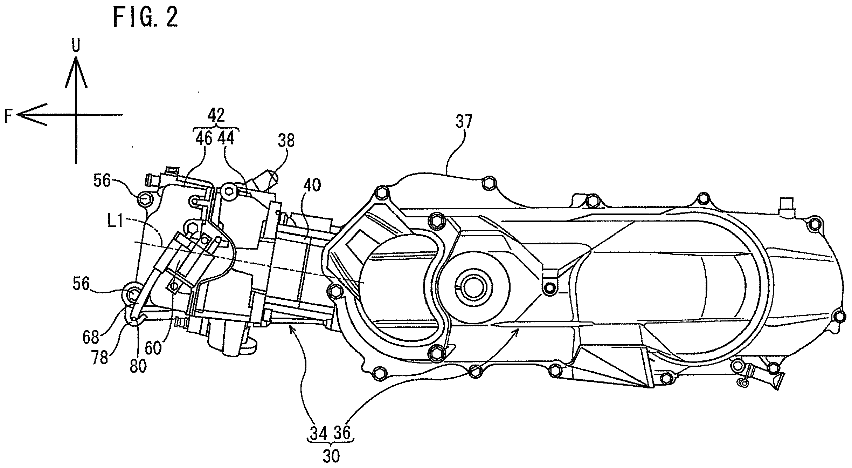

Referring to Fig. 2, the power unit 30 will be described. Fig. 2 is a left side view of the power unit 30. In Fig. 2, the arrow F designates the forward direction of the motorcycle 10 and the arrow U designates the upward direction of the motorcycle 10. The power unit 30 includes an engine 34 and a transmission 36.

The engine 34 is for example a 4-stroke single cylinder engine. The engine 34 generates the motive power of the motorcycle 10. The engine 34 may be either an air-cooling engine or a water-cooling engine.

The transmission 36 is a continuously variable transmission. The transmission 36 transmits the motive power generated by the engine 34 to the rear wheel 32 (see Fig. 1).

### Engine

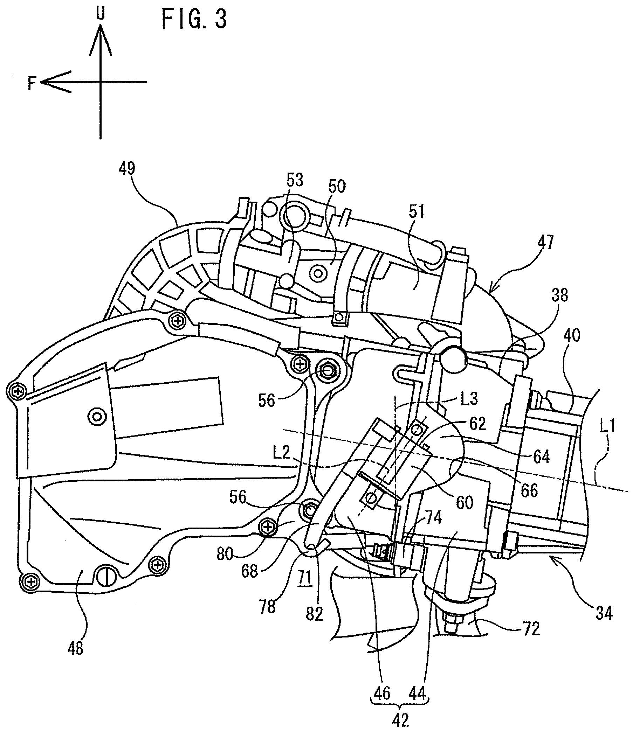

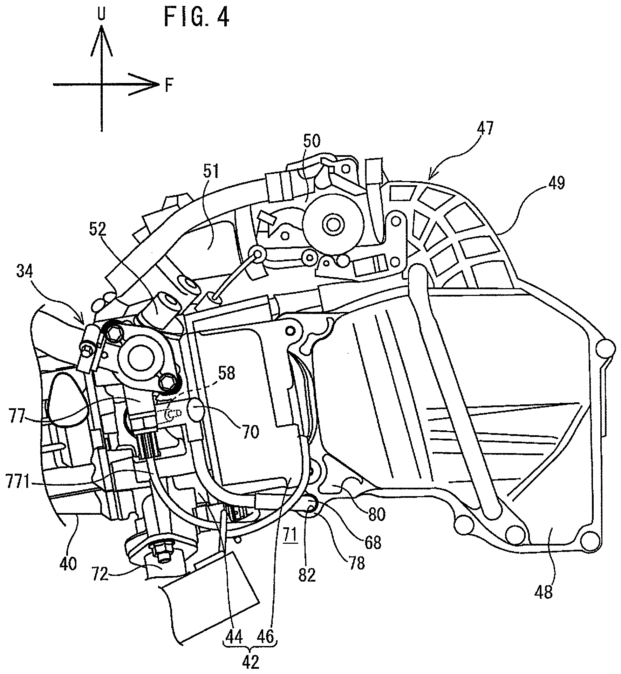

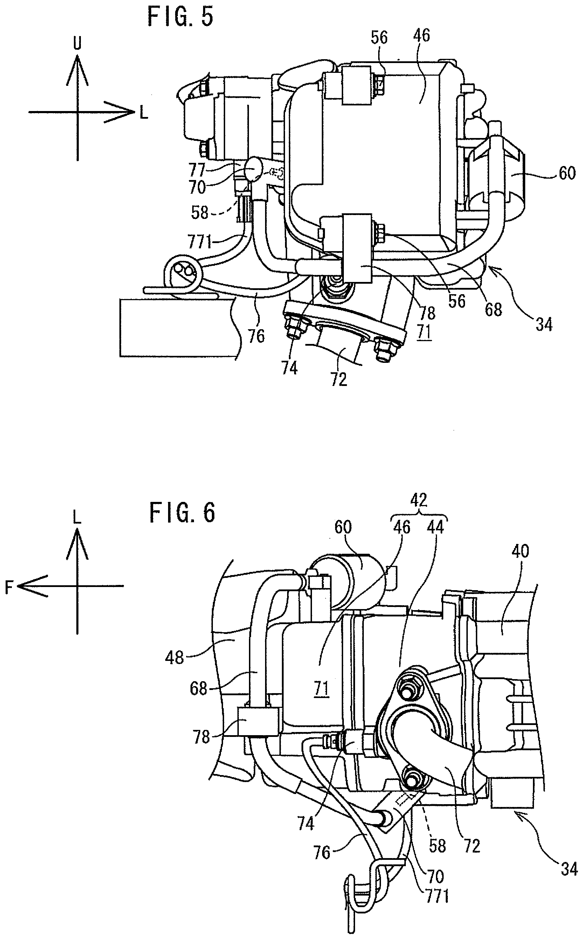

Referring to Figs. 3 to 6, the engine 34 will be described. Fig. 3 is a left side view of the engine 34. Fig. 4 is a right side view of the engine 34. Fig. 5 is a front view of the engine 34. Fig. 6 is a bottom view of the engine 34. In Figs. 3 and 4, the arrow F designates the forward direction of the motorcycle 10 and the arrow U designates the upward direction of the motorcycle 10. In Fig. 5, the arrow L designates the leftward direction of the motorcycle 10 and the arrow U designates the upward direction of the motorcycle 10. In Fig. 6, the arrow F designates the forward direction of the motorcycle 10 and the arrow L designates the leftward direction of the motorcycle 10. Note that an intake system 47 is not shown in Fig. 5.

The engine 34 has a cylinder 38. The cylinder 38 guides a piston to perform linear reciprocating motion. As shown in Figs. 2 and 3, the cylinder 38 has an axial line (cylinder axial line L1) which extends in a front-to-rear direction. Note that in this embodiment, the cylinder axial line L1 is slightly inclined relative to a horizontal direction and extends obliquely upward in the forward direction. Therefore, a front end portion of the cylinder 38 is positioned above a rear end portion of the cylinder 38.

The cylinder 38 has a cylinder body 40 and a cylinder head 42.

The cylinder body 40 is attached at a front end of a transmission case 37 that stores the transmission 36. The piston is provided in the cylinder body 40.

The cylinder head 42 has a head main body 44 and a head cover 46.

The head main body 44 is attached to a front portion of the cylinder body 40. The head main body 44 forms a combustion chamber together with the piston. The head main body 44 is provided with a camshaft. The camshaft drives a valve. The valve carries out air intake/exhaust to/from the combustion chamber.

The head cover 46 is attached to a front portion of the head main body 44. The head cover 46 covers the camshaft.

### Intake System

The intake system 47 is provided near the cylinder head 42. The intake system 47 produces an air-fuel mixture and supplies the mixture to the combustion chamber. In the example shown in Figs. 3 to 6, the intake system 47 is provided upward from the front of the cylinder head 42.

As shown in Figs. 3 and 4, the intake system 47 includes an air cleaner 48, an intake pipe 49, a throttle body 50, a manifold 51, an injector 52, and a sensor 53.

The air cleaner 48 stores air cleaner elements. The air cleaner 48 is provided in front of the cylinder head 42. In the example shown in Figs. 3 to 6, the air cleaner 48 is fixed to the head cover 46 with a bolt 56. Therefore, the air cleaner 48 is positioned immediately in front of the head cover 46. As a result, there is only a small gap between the air cleaner 48 and the head cover 46.

The intake pipe 49 is positioned above the air cleaner 48. The intake pipe 49 has one end connected to the air cleaner 48. The other end of the intake pipe 49 is connected to the throttle body 50. The intake pipe 49 guides air passed through the air cleaner elements into the throttle body 50.

The throttle body 50 is positioned behind the intake pipe 49. The throttle body 50 is positioned obliquely above and ahead of the head cover 46. The throttle body 50 has one end connected to the intake pipe 49. The other end of the throttle body 50 is connected to the manifold 51. The throttle body 50 stores a throttle valve. The throttle valve adjusts the flow rate of the air.

The manifold 51 is positioned behind the throttle body 50. The manifold 51 has one end connected to the throttle body 50. The other end of the manifold 51 is connected to the head main body 44. The manifold 51 guides air having its flow rate adjusted by the throttle valve to the head main body 44.

The injector 52 is attached to the head main body 44. The injector 52 is for example attached to an intake port provided at the head main body 44. The intake port is connected with the other end of the manifold 51. The injector 52 injects fuel into air passed through the air cleaner elements and having its flow rate adjusted by the throttle valve. In this way, an air-fuel mixture is generated. The amount of the air-fuel mixture supplied to the combustion chamber changes depending on the opening/closing amount of the throttle valve. The injector 52 is positioned above the ignition plug 58 and the ignition coil 60.

A sensor 53 (see Fig. 3) is attached to the throttle body 50. The sensor 53 is positioned above and ahead of the ignition plug 58 and the ignition coil 60. The sensor 53 is positioned above the cylinder axial line L1. The sensor 53 detects a state of the engine 34. The sensor 53 for example outputs a signal used to control the output of the engine 34. The sensor 53 is for example an intake pipe pressure sensor, an intake temperature sensor, and a throttle position sensor. The intake pipe pressure sensor detects intake air pressure. The intake temperature sensor detects intake air temperature. The throttle position sensor detects the opening degree of the throttle valve. According to the embodiment, the sensor 53 is an integrated sensor capable of functioning as an intake pipe pressure sensor, an intake temperature sensor and a throttle position sensor. A fuel injection amount by the injector 52 is determined based on intake air pressure detected by the sensor 53.

### Ignition Plug

The ignition plug 58 is attached to the head body 44 at one side (right side) of the cylinder head 42. More specifically, the ignition plug 58 is shifted toward one side relative to the cylinder axial line L1 in a vehicle width direction. The ignition plug 58 ignites an air-fuel mixture compressed in the combustion chamber. In this way, the air-fuel mixture explodes/combusts.

### Ignition Coil

The ignition coil 60 is located on the head cover 46 at the other side (left side) of the cylinder head 42. More specifically, the ignition coil 60 is shifted toward the other side relative to the cylinder axial line L1 in a vehicle width direction. The ignition coil 60 generates voltage necessary for the ignition plug 58 to ignite an air-fuel mixture. The ignition coil 60 has a tubular outer circumferential surface.

The ignition coil 60 is attached to the head cover 46 for example with a bolt. As shown in Fig. 3, in this state, the axial line L2 of the ignition coil 60 extends inclined with respect to the reference line L3 that extends in the vertical direction. The axial line L2 of the ignition coil 60 extends obliquely upward in the backward direction. Stated differently, the axial line L2 of the ignition coil 60 extends obliquely downward in the forward direction. The upper surface 62 of the ignition coil 60 extends downward in the backward direction.

When the engine 34 is viewed from the left or a vehicle side, the ignition coil 60 overlaps a projection 64 of the head cover 46 as shown in Fig. 3. The projection 64 enters a notch 66 formed at the head main body 44. The notch 66 is formed for example in order to use a necessary tool in providing a camshaft in the head main body 44.

### Plug Cord

The ignition coil 58 and the ignition coil 60 are connected by the plug cord 68. High voltage current generated by the ignition coil 60 is passed through the plug cord 68.

The plug cord 68 extends downward and forward from the ignition coil 60 along the axial line L2 of the ignition coil 60. Stated differently, the plug cord 68 extends obliquely downward in the forward direction from the ignition coil 60. The plug cord 68 is positioned more on the front side than the axial line L2 of the ignition coil 60 and more on the front side than the tubular outer circumferential surface of the ignition coil 60.

The plug cord 68 includes a plug cap 70. The plug cap 70 is positioned at one end of the plug cord 68 (on an opposite end to the side of the ignition coil 60). The plug cap 70 is provided over the ignition plug 58. In this way, the ignition plug 58 and the ignition coil 60 are electrically connected through the plug cord 68.

As the plug cap 70 is attached to the ignition plug 58, the plug cord 68 extends downward and forward from the ignition plug 58. The plug cord 68 has a part that extends downward from one end of the plug cap 70.

The plug cord 68 runs under the lower side of the head cover 46 and connects the ignition plug 58 and the ignition coil 60. More specifically, an intermediate part of the plug cord 68 in the lengthwise direction is provided under the head cover 46. Stated differently, the lengthwise intermediate part of the plug cord 68 is provided below the lower surface of the head cover 46. In other words, the plug cord 68 runs below the lower surface of the head cover 46 and connects the ignition plug 58 and the ignition coil 60. In other words, the plug 68 passes through a space 71 positioned below the lower surface of the head cover 46. The space 71 needs only be below the lower surface of the head cover 46. For example, a space positioned under the lower surface of the air cleaner 48 is included in the space 71. More specifically, the lengthwise intermediate part of the plug cord 68 needs only be positioned under the cylinder head 42. Therefore, the case of the lengthwise intermediate part of the plug cord 68 being positioned under the air cleaner 48 included in the case of the lengthwise intermediate part of the plug cord 68 being positioned under the cylinder head 42. Note that the left and right ends of the space 71 match the left and right ends of the cylinder head 42. Stated differently, the left-right width of the space 71 is defined by the left-right width of the cylinder head 42.

In the example shown in Figs. 3 to 6, the plug cord 68 is provided ahead of the exhaust pipe 72 connected to the head main body 44. Here, the head main body 44 is provided with an oxygen sensor 74 in the vicinity of the exhaust pipe 72. As shown in Figs. 5 and 6, a wire 76 connected to the oxygen sensor 74 is positioned in the vicinity of the plug cord 68. As shown in Fig. 6, however, the wire 76 crosses the plug cord 68. In this way, the wire 76 is less likely to be affected by noise caused when high voltage current is passed through the plug cord 68.

As shown in Fig. 4, a water temperature sensor 77 is provided in the vicinity of the ignition plug 58. The water temperature sensor 77 is used to detect the temperature of cooling water used to cool the engine 34. As shown in Figs. 4 to 6, a wire 771 connected to the water temperature sensor 77 is apart from the plug cord 68. Therefore, the wire 771 is less likely to be affected by noise caused when high voltage current is passed through the plug cord 68.

### Support Member

In the example shown in Figs. 3 to 6, the lengthwise intermediate part of the plug cord 68 is positioned under a front end of the head cover 46. Here, the air cleaner 48 has a support member 78.

The support member 78 is provided at a lower edge of the rear end of the air cleaner 48. In the example shown in Figs. 3 to 6, the support member 78 is provided at an attachment piece 80 of the air cleaner 48. The attachment piece 80 has a hole through which a bolt 56 is passed through.

The support member 78 has a groove 82. The groove 82 extends in the left-right direction and opens obliquely upward in the backward direction. The lengthwise intermediate part of the plug cord 68 is fitted into the groove 82. In this way, the support member 78 supports the lengthwise intermediate part of the plug cord 68 from below.

### Advantageous Effects of the Embodiment

According to the embodiment, the air cleaner 48 is provided ahead of the cylinder head 42. In addition, there is only a small gap between the cylinder head 42 and the air cleaner 48. More specifically, there is no space between the cylinder head 42 and the air cleaner 48 to provide the ignition plug 58, ignition coil 60 and plug cord 68. Therefore, the ignition plug 58 and the ignition coil 60 cannot be provided in front of the cylinder head 42. The plug cord 68 cannot be provided in front of the cylinder head 42 either.

In this condition, the ignition plug 58 is attached at a right side surface of the cylinder head 42 according to the embodiment. The ignition coil 60 is attached at a left side surface of the cylinder head 42. The plug cord 68 is provided under the cylinder head 42. The ignition plug 58, the ignition coil 60, and the plug cord 68 can be provided efficiently.

Particularly according to the embodiment, the plug cord 68 is provided under the cylinder head 42. This allows a region under the cylinder head 42 that would otherwise be wasted as a dead space could be used effectively.

According to the embodiment, the sensor 53 is provided above the cylinder axial line L1. The sensor 53 is positioned above the ignition plug 58 and the ignition coil 60. The sensor 53 is less likely to be affected by noise generated when high voltage current is passed through the plug cord 68.

Particularly according to the embodiment, the sensor 53 outputs a signal used to determine a fuel injection amount by the injector 52. The injector 52 is less likely to be affected by noise caused when high voltage current is passed through the plug cord 68.

According to the embodiment, the injector 52 is provided above the cylinder axial line L1. The injector 52 is positioned above the ignition plug 58 and the ignition coil 60. The injector 52 is less likely to be affected by noise caused when high voltage current is passed through the plug cord 68.

According to the embodiment, the plug cord 68 is provided ahead of the exhaust pipe 72. In this way, the plug cord 68 can be kept away from the exhaust pipe 72 that can be a heat source.

According to the embodiment, the cylinder axial line L1 of the engine 34 extends obliquely upward in the forward direction. This makes it easier to secure a space for providing the plug cord 68 under the front end of the cylinder head 42.

According to the embodiment, the plug cord 68 is provided under the front end of the cylinder head 42. The plug cord 68 can be kept away from the cylinder body 40 and the head main body 44 that can be a heat source.

According to the embodiment, the air cleaner 48 has the support member 78. The support member 78 supports the lengthwise intermediate part of the plug cord 68. In this way, vibrations are less likely to be transmitted to the plug cap 70.

According to the embodiment, the support member 78 supports the lengthwise intermediate part of the plug cord 68 under the front end of the cylinder head 42. The plug cord 68 can be supported in the vicinity of the air cleaner 48. The plug cord 68 can be supported by the support member 78 in a stable state.

According to the embodiment, the plug cord 68 extends downward from the ignition coil 60. In this way, the plug cord 68 can be handled more easily. The plug cord 68 is less likely to receive a load at a connection end to the ignition coil 60.

According to the embodiment, the plug cord 68 extends downward from the ignition plug 58. This makes it easier to handle the plug cord 68. The plug cord 68 is less likely to receive a load at a connection end to the ignition plug 58.

According to the embodiment, the axial line L2 of the ignition coil 60 is inclined with respect to the reference line L3. A top surface 62 of the ignition coil 60 is inclined downwardly in the backward direction. In this way, rain water is hardly collected at the top surface 62 of the ignition coil 62. The ignition coil 60 can be prevented from corroding.

Particularly according to the embodiment, the axial line L2 of the ignition coil 60 extends obliquely downward in the forward direction. The plug cord 68 extends obliquely downward in the forward direction from the ignition coil 60. This makes it easier to provide the plug cord 68 under the front end of the cylinder head 42.

According to the embodiment, the head cover 46 has the projection 64. When the engine 34 is viewed from a left side surface or a vehicle side, the ignition coil 60 overlaps the projection 64. In this way, the ignition coil 60 does not have to be provided to extend over the head cover 46 and the head main body 44. This makes it easier to secure a space for providing the ignition coil 60 and thus makes it easier to provide the ignition coil 60.

The embodiment has been described by way of a motorcycle but the present invention may be applied for example to a 3-wheel or 4-wheel leaning vehicle.

## Claims

1. A saddle riding type vehicle (10), comprising:
an engine (34) having a cylinder head (42);
an ignition plug (58) provided at a side surface of the cylinder head (42);
an ignition coil (60) attached to a side surface of the cylinder head (42) that is opposite, in the width direction of the vehicle, to the side surface provided with the ignition plug (58); and
a plug cord (68) arranged to connect the ignition plug (58) and the ignition coil (60),
the plug cord (68) being provided under the cylinder head (42).

2. The saddle riding type vehicle (10) according to claim 1, further comprising a sensor (53) arranged to detect a state of the engine (34), the sensor (53) being provided above the ignition coil (60) or the ignition plug (58).

3. The saddle riding type vehicle (10) according to claim 2, wherein the sensor (53) includes at least one of an intake pipe pressure sensor, an intake temperature sensor, and a throttle position sensor.

4. The saddle riding type vehicle (10) according to any one of claims 1 to 3, further comprising an injector (52) arranged to inject fuel used to generate an air-fuel mixture to be supplied to the engine (34), the injector (52) being provided above the ignition coil (60) or the ignition plug (58).

5. The saddle riding type vehicle (10) according to any one of claims 1 to 4, further comprising an exhaust pipe (72) connected to the cylinder head (42), the plug cord (68) being provided ahead of the exhaust pipe (72).

6. The saddle riding type vehicle (10) according to any one of claims 1 to 5, wherein the plug cord (68) extends downward from the ignition coil (60).

7. The saddle riding type vehicle (10) according to any one of claims 1 to 6, wherein the plug cord (68) extends downward from the ignition plug (58).

8. The saddle riding type vehicle (10) according to any one of claims 1 to 7, wherein the ignition coil (60) has an axial line (L2) inclined with respect to a reference line (L3) that extends in the vertical direction.

9. The saddle riding type vehicle (10) according to claim 8, wherein the ignition coil (60) has an axial line (L2) that extends obliquely downward in a forward direction and the plug cord (68) extends obliquely downward in a forward direction from the ignition coil (60).

10. The saddle riding type vehicle (10) according to any one of claims 1 to 9, wherein the engine (34) has a cylinder axial line (L1) that extends obliquely upward in the forward direction.

11. The saddle riding type vehicle (10) according to any one of claims 1 to 10, wherein the cylinder head (42) comprises:
a head main body (44); and
a head cover (46) attached to the head main body (44),
the head cover (46) has a projection (64) that projects toward the head main body (44),
the head main body (44) has a notch (66) which the projection (64) is arranged in, and
the ignition coil (60) overlaps the projection (64) when the cylinder head (42) is viewed from a vehicle side.

12. The saddle riding type vehicle (10) according to any one of claims 1 to 11, further comprising an air cleaner (48) provided ahead of the cylinder head (42), the air cleaner (48) having a support member (78) arranged to support a lengthwise intermediate part of the plug cord (68).

13. The saddle riding type vehicle (10) according to claim 12, wherein the support member (78) is arranged to support the plug cord (68) under a front end of the cylinder head (42).

## Patentansprüche

1. Ein Fahrzeug vom Sattelreittyp (10), das folgende Merkmale aufweist:
einen Motor (34) mit einem Zylinderkopf (42);
eine Zündkerze (58), die an einer Seitenoberfläche des Zylinderkopfs (42) vorgesehen ist;
eine Zündspule (60), die an einer Seitenoberfläche des Zylinderkopfs (42) angebracht ist, die in der Breiterichtung des Fahrzeugs der Seitenoberfläche, die mit der Zündkerze (58) versehen ist, gegenüberliegt; und
ein Steckerkabel (68), das angeordnet ist, um die Zündkerze (58) und die Zündspule (60) zu verbinden,
wobei das Steckerkabel (68) unter dem Zylinderkopf (42) vorgesehen ist.

2. Das Fahrzeug vom Sattelreittyp (10) gemäß Anspruch 1, das ferner einen Sensor (53) aufweist, der angeordnet ist, um einen Zustand des Motors (34) zu erfassen, wobei der Sensor (53) über der Zündspule (60) oder der Zündkerze (58) angeordnet ist.

3. Das Fahrzeug vom Sattelreittyp (10) gemäß Anspruch 2, bei dem der Sensor (53) zumindest einen eines Ansaugrohrdrucksensors, eines Ansaugtemperatursensors und eines Drosselpositionssensors aufweist.

4. Das Fahrzeug vom Sattelreittyp (10) gemäß einem der Ansprüche 1 bis 3, das ferner eine Einspritzvorrichtung (52) aufweist, die angeordnet ist, um Kraftstoff einzuspritzen, die verwendet wird, um eine Luft-Kraftstoff-Mischung zu erzeugen, die dem Motor (34) zuzuführen ist, wobei die Einspritzvorrichtung (52) über der Zündspule (60) oder der Zündkerze (58) vorgesehen ist.

5. Das Fahrzeug vom Sattelreittyp (10) gemäß einem der Ansprüche 1 bis 4, das ferner ein Abgasrohr (72) aufweist, das mit dem Zylinderkopf (42) verbunden ist, wobei das Steckerkabel (68) vor dem Abgasrohr (72) vorgesehen ist.

6. Das Fahrzeug vom Sattelreittyp (10) gemäß einem der Ansprüche 1 bis 5, bei dem sich das Steckerkabel (68) von der Zündspule (60) nach unten erstreckt.

7. Das Fahrzeug vom Sattelreittyp (10) gemäß einem der Ansprüche 1 bis 6, bei dem sich das Steckerkabel (68) von der Zündkerze (58) nach unten erstreckt.

8. Das Fahrzeug vom Sattelreittyp (10) gemäß einem der Ansprüche 1 bis 7, bei dem die Zündspule (60) eine Axiallinie (L2) aufweist, die in Bezug auf eine Referenzlinie (L3), die sich in der Vertikalrichtung erstreckt, geneigt ist.

9. Das Fahrzeug vom Sattelreittyp (10) gemäß Anspruch 8, bei dem die Zündspule (60) eine Axiallinie (L2) aufweist, die sich in einer Vorwärtsrichtung schräg nach unten erstreckt und das Steckerkabel (68) sich in einer Vorwärtsrichtung von der Zündspule (60) schräg nach unten erstreckt.

10. Das Fahrzeug vom Sattelreittyp (10) gemäß einem der Ansprüche 1 bis 9, bei dem der Motor (34) eine Zylinderaxiallinie (L1) aufweist, die sich in der Vorwärtsrichtung schräg nach oben erstreckt.

11. Das Fahrzeug vom Sattelreittyp (10) gemäß einem der Ansprüche 1 bis 10, bei dem der Zylinderkopf (42) folgende Merkmale aufweist:
einen Kopfhauptkörper (44); und
eine Kopfabdeckung (46), die an den Kopfhauptkörper (44) angebracht ist,
wobei die Kopfabdeckung (46) einen Vorstand (64) aufweist, der zu dem Kopfhauptkörper (44) hin vorsteht,
der Kopfhauptkörper (44) eine Kerbe (66) aufweist, in der der Vorstand (64) angeordnet ist und
die Zündspule (60) mit dem Vorstand (64) überlappt, wenn der Zylinderkopf (42) von einer Fahrzeugseite aus betrachtet wird.

12. Das Fahrzeug vom Sattelreittyp (10) gemäß einem der Ansprüche 1 bis 11, das ferner ein Luftfilter (48) aufweist, das vor dem Zylinderkopf (42) vorgesehen ist, wobei das Luftfilter (48) ein Tragebauglied (78) aufweist, das angeordnet ist, um ein Längszwischenteil des Steckerkabels (68) zu tragen.

13. Das Fahrzeug vom Sattelreittyp (10) gemäß Anspruch 12, bei dem das Tragebauglied (78) angeordnet ist, um das Steckerkabel (68) unter einem vorderen Ende des Zylinderkopfs (42) zu tragen.

## Revendications

1. Véhicule du type à selle (10), comprenant:
un moteur (34) présentant une culasse (42);
une bougie d'allumage (58) prévue sur une surface latérale de la culasse (42);
une bobine d'allumage (60) fixée à une surface latérale de la culasse (42) opposée, dans le sens de la largeur du véhicule, à la surface latérale pourvue de la bougie d'allumage (58); et
un cordon d'alimentation (68) disposé de manière à connecter la bougie d'allumage (58) et la bobine d'allumage (60),
le cordon d'alimentation (68) étant prévu sous la culasse (42).

2. Véhicule du type à selle (10) selon la revendication 1, comprenant par ailleurs un capteur (53) disposé de manière à détecter un état du moteur (34), le capteur (53) étant prévu au-dessus de la bobine d'allumage (60) ou de la bougie d'allumage (58).

3. Véhicule du type à selle (10) selon la revendication 2, dans lequel le capteur (53) comporte au moins l'un parmi un capteur de pression de tuyau d'admission, un capteur de température d'admission et un capteur de position de soupape d'étranglement.

4. Véhicule du type à selle (10) selon l'une quelconque des revendications 1 à 3, comprenant par ailleurs un injecteur (52) disposé de manière à injecter le carburant utilisé pour générer un mélange d'air et de carburant destiné à être alimenté vers le moteur (34), l'injecteur (52) est prévu au-dessus de la bobine d'allumage (60) ou de la bougie d'allumage (58).

5. Véhicule du type à selle (10) selon l'une quelconque des revendications 1 à 4, comprenant par ailleurs un tuyau d'échappement (72) connecté à la culasse (42), le cordon d'alimentation (68) étant prévu devant le tuyau d'échappement (72).

6. Véhicule du type à selle (10) selon l'une quelconque des revendications 1 à 5, dans lequel le cordon d'alimentation (68) s'étend vers le bas à partir de la bobine d'allumage (60).

7. Véhicule du type à selle (10) selon l'une quelconque des revendications 1 à 6, dans lequel le cordon d'alimentation (68) s'étend vers le bas à partir de la bougie d'allumage (58).

8. Véhicule du type à selle (10) selon l'une quelconque des revendications 1 à 7, dans lequel la bobine d'allumage (60) présente une ligne axiale (L2) inclinée par rapport à une ligne de référence (L3) qui s'étend dans la direction verticale.

9. Véhicule du type à selle (10) selon la revendication 8, dans lequel la bobine d'allumage (60) présente une ligne axiale (L2) qui s'étend obliquement vers le bas dans une direction vers l'avant et le cordon d'alimentation (68) s'étend obliquement vers le bas dans une direction vers l'avant à partir de la bobine d'allumage (60).

10. Véhicule du type à selle (10) selon l'une quelconque des revendications 1 à 9, dans lequel le moteur (34) présente une ligne axiale de cylindre (L1) qui s'étend obliquement vers le haut dans la direction vers l'avant.

11. Véhicule (10) du type à selle selon l'une quelconque des revendications 1 à 10, dans lequel la culasse (42) comprend:
un corps principal de culasse (44); et
un couvercle de culasse (46) fixé au corps principal de culasse (44),
le couvercle de culasse (46) présente une saillie (64) qui fait saillie vers le corps principal de culasse (44),
le corps principal de culasse (44) présente une encoche (66) dans laquelle est disposée la saillie (64), et
la bobine d'allumage (60) vient en recouvrement avec la saillie (64) lorsque la culasse (42) est vue d'un côté du véhicule.

12. Véhicule du type à selle (10) selon l'une quelconque des revendications 1 à 11, comprenant par ailleurs un épurateur d'air (48) prévu devant la culasse (42), l'épurateur d'air (48) présentant un élément de support (78) disposé de manière à supporter une partie intermédiaire dans le sens de la longueur du cordon d'alimentation (68).

13. Véhicule du type à selle (10) selon la revendication 12, dans lequel l'élément de support (78) est disposé de manière à supporter le cordon d'alimentation (68) sous une extrémité avant de la culasse (42).
